(19) Europäisches Patentamt / European Patent Office / Office européen des brevets

(11) **EP 2 444 273 A2**

(12) **EUROPEAN PATENT APPLICATION**

(43) Date of publication:
**25.04.2012 Bulletin 2012/17**

(51) Int Cl.:
***B60L 15/10*** (2006.01)      ***B60L 15/20*** (2006.01)

(21) Application number: **11186283.5**

(22) Date of filing: **24.10.2011**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME** | (71) Applicant: **Mitsubishi Jidosha Kogyo Kabushiki Kaisha**<br>**Tokyo 108-8410 (JP)** |
| (30) Priority: **25.10.2010 JP 2010238269** | (72) Inventor: **Saito, Jun**<br>**Tokyo, 108-8410 (JP)** |
| | (74) Representative: **Collin, Jérôme et al**<br>**Cabinet Regimbeau**<br>**20, rue de Chazelles**<br>**75847 Paris Cedex 17 (FR)** |

(54) **Motor control apparatus for electric vehicle**

(57)      A motor control apparatus for an electric vehicle including a first motor to drive front wheels of the electric vehicle and a second motor to drive rear wheels of the electric vehicle, includes: a motor driving control unit that distributes a demand torque to be demanded for the electric vehicle and controls the first and second motors; a determination unit that counts time during which a driving torque distributed to one of the first and second motors is a reference torque, which is preset for the one of the first and second motors, or higher and determines whether the counted time is predetermined time or longer; and a driving torque distribution control unit that, when the counted time is the predetermined time or longer, reduces the driving torque distributed to the one of the first and second motors to below the reference torque and increases a driving torque distributed to the other of the first and second motors.

EP 2 444 273 A2

**Description**

BACKGROUND OF THE INVENTION

The invention relates to a motor control apparatus for an electric vehicle.

In an electric automobile that drives driving wheels by driving torques output from a plurality of motors, it is preferable to drive the respective motors so that an entire efficiency of the motors becomes maximum, from a standpoint of power consumption. However, when the respective motors are driven in preference to the efficiency, one or more motors may be driven at an instantaneous rating, for example. When the motor is continuously driven at the instantaneous rating for a long time, a temperature of the motor may exceed a permitted temperature. At this time, when the temperature of the motor exceeds the permitted temperature, the motor is deteriorated. Accordingly, a related-art technique for avoiding the above problem has been suggested in which limit values of maximum outputs (driving torques) of the motors are respectively set in correspondence to the temperatures of the respective motors and the respective motors are driven based on the limit values in accordance with detection results of the temperatures of the respective motors (refer to JP-07-46721A).

However, the above related art simply performs the driving control of the motors, based on the detected temperatures of the respective motors. Therefore, the driving control of the respective motors is easily influenced by non-uniformity included in the detected temperatures of the respective motors, delay of detection time necessary to detect the temperature of the motors and the like. Thus, there are needs for improvement on the accurate suppression of heat generation of the motors.

SUMMARY

It is therefore an object of the invention to provide a motor control apparatus for an electric automobile that is favorable in suppressing heat generation of a motor more accurately while securing demand torque.

In order to achieve the object, according to the invention, there is provided a motor control apparatus for an electric vehicle, the electric vehicle including a first motor to drive front wheels of the electric vehicle and a second motor to drive rear wheels of the electric vehicle, the motor control apparatus comprising: a motor driving control unit that distributes a demand torque to be demanded for the electric vehicle and controls the first and second motors; a determination unit that counts time during which a driving torque distributed to one of the first and second motors is a reference torque, which is preset for the one of the first and second motors, or higher and determines whether the counted time is predetermined time or longer; and a driving torque distribution control unit that, when the counted time is the predetermined time or longer, reduces the driving torque distributed to the one of the first and second motors to below the reference torque and increases a driving torque distributed to the other of the first and second motors.

The motor control apparatus may further comprise: a revolution detection unit that detects number of revolutions of the first and second motors, respectively, and a reference torque setting unit that sets the respective reference torques of the first and second motors, based on rating values indicating upper limits of driving torques defined in correspondence to the number of revolutions of the first and second motors.

The motor control apparatus may further comprise a temperature detection unit that detects temperatures of the first and second motors, respectively. The respective reference torques of the first and second motors may be set, based on rating values indicating upper limits of driving torques defined in correspondence to the temperatures of the first and second motors.

The motor control apparatus may further comprise: a power consumption detection unit that detects power consumptions of the first and second motors, respectively, and a predetermined time setting unit that changes the predetermined time into a smaller value as the power consumptions of the first and second motors are increased.

The predetermined time setting unit may change the predetermined time into a smaller value as temperatures of the first and second motors are increased.

BRIEF DESCRIPTION OF THE DRAWINGS

   FIG. 1 is a block diagram showing an entire configuration of a vehicle having a motor control apparatus mounted thereto according to an illustrative embodiment of the invention.

   FIG. 2 is a functional block diagram showing a configuration of the motor control apparatus.

   FIG. 3 is a characteristic view of torque vs. the number of revolutions for illustrating an efficiency of a motor.

   FIGS. 4(A) and 4(B) are characteristic views of torque vs. the number of revolutions for illustrating relations between operating points P of respective motors and efficiencies of the motors.

FIG. 5 is a characteristic view of torque vs. the number of revolutions for illustrating one minute rating and 60 minutes rating of the respective motors.

FIGS. 6(A) and 6(B) are characteristic views of torque vs. the number of revolutions for illustrating relations between operating points P of respective motors and ratings of the motors.

FIG. 7 illustrates a three-dimensional map in which the number of revolutions N, a motor temperature Tmot and reference torque Trq0 are made to correspond to each other.

FIG. 8 illustrates a relation between the motor temperature Tmot and a temperature correction coefficient k.

FIG. 9 illustrates a three-dimensional map in which a motor temperature Tmot, power consumption Pmot and reference time (predetermined time) TO are made to correspond to each other.

FIG. 10 is a flowchart showing an operation of the motor control apparatus.

## DETAILED DESCRIPTION OF EMBODIMENTS

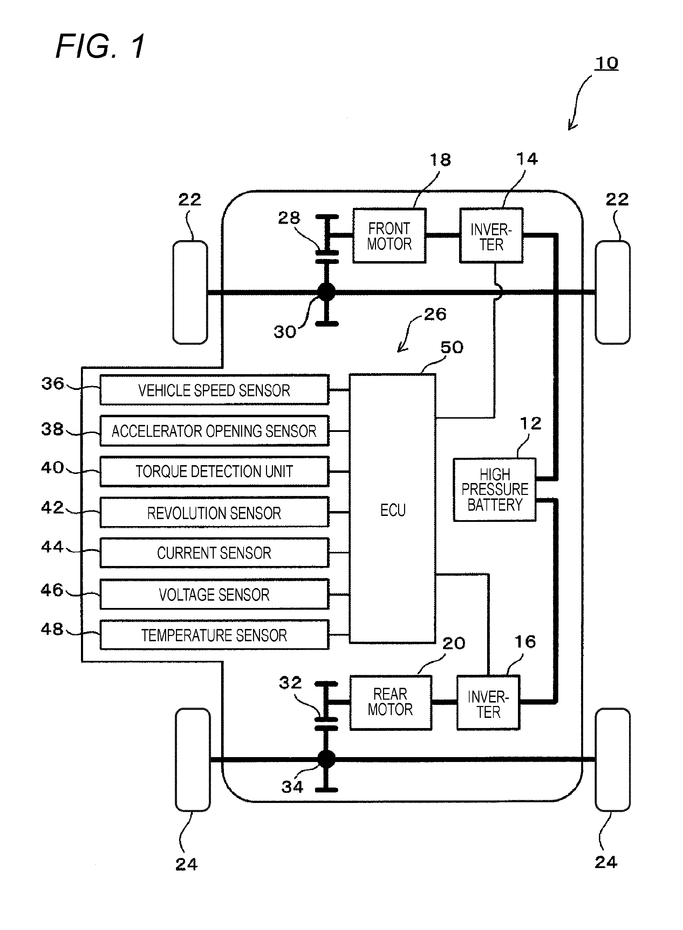

Hereinafter, illustrative embodiments of the invention will be described with reference to the drawings. As shown in FIG. 1, a vehicle 10 is an electric vehicle (electric automobile). The vehicle 10 has a high pressure battery 12, inverters 14, 16, a front motor 18, a rear motor 20, front wheels 22, rear wheels 24, a cooling apparatus 52 and a motor control apparatus 26 according to an illustrative embodiment of the invention. The high pressure battery 12 supplies power to the front motor 18 and the rear motor 20. The inverters 14, 16 convert the direct current power supplied from the high pressure battery 12 into three-phase alternating current power and supply the same to the front motor 18 and the rear motor 20, respectively. The inverters 14, 16 control the three-phase alternating current powers, which are supplied to the front motor 18 and the rear motor 20 by, for example, a pulse width modulation (PWM), based on control of an ECU 50 (which will be described in the below), so that the driving torques output from the front motor 18 and the rear motor 20 are controlled. The front motor 18 is rotated by the alternating current power supplied from the inverter 14 and provides the power (driving torque) to the front wheels 22 via a deceleration gear 28 and a differential gear 30, thereby driving the front wheels 22. The rear motor 20 is rotated by the three-phase alternating current power supplied from the inverter 16 and provides the power (driving torque) to the rear wheels 24 via a deceleration gear 32 and a differential gear 34, thereby driving the rear wheels 24. In the meantime, the front motor 18 corresponds one of first and second motors and the rear motor 20 corresponds to the other of the first and second motors. The high pressure battery 12 is charged by power that is supplied from a power supply (household power supply), a power supply for rapid charge of a charge stand and the like, via a charge apparatus (not shown). Also, when the vehicle 10 is under regenerative braking, the front motor 18 and the rear motor 20 function as a generator, and the three-phase alternating current powers generated in the front motor 18 and the rear motor 20 are converted into the direct current powers via the inverters 14, 16, which are then charged in the high pressure battery 12. The cooling apparatus 30 is controlled by the ECU 50 (which will be described later) and cools the front motor 18 and the rear motor 20 so that motor temperatures Tmot of the front motor 18 and the rear motor 20, which are detected by a temperature sensor 48 (which will be described in the below), do not exceed a permitted temperature, based on the detected temperatures. When the cooling apparatus 30 operates, cooling water is circulated to cool the respective motors 18, 20. Also, when the temperatures of the motors 18, 20 are considerably increased, the cooling apparatus cools the cooling water by a radiator.

The motor control apparatus 26 has a vehicle speed sensor 36, an accelerator opening sensor 38, a torque detection unit 40, a revolution sensor 42, a current sensor 44, a voltage sensor 46, the temperature sensor 48 and the ECU 50. The vehicle speed sensor 36 detects traveling speed of the vehicle 10 and supplies the same to the ECU 50. The accelerator opening sensor 38 detects an opening (operation amount) of an accelerator pedal and supplies the same to the ECU 50. The torque detection unit 40 respectively detects driving torques output from the front motor 18 and the rear motor 20 and supplies the same to the ECU 50. In the meantime, the torque detection unit 40 may be configured by torque sensors provided to driving shafts of the front motor 18 and the rear motor 20. The torque detection unit 40 may calculate (estimate) the respective driving torques, based on the control amounts of the respective motors 18, 20 supplied from the ECU 50 to the respective inverters 14, 16. In this case, the torque detection unit 40 may be configured by the ECU 50. The revolution sensor 42 respectively detects the number of revolutions of the front motor 18 and the rear motor 20 and supplies the same to the ECU 50 and configures a revolution detection unit. The current sensor 44 respectively detects currents of the three-phase alternating current powers supplied to the front motor 18 and the rear motor 20 and supplies the same to the ECU 50. The voltage sensor 46 respectively detects voltages of the three-phase alternating current powers supplied to the front motor 18 and the rear motor 20 and supplies the same to the ECU 50. The temperature sensor 48 respectively detects the motor temperatures Tmot of the front motor 18 and the rear motor 20 and supplies the same to the ECU 50 and configures a temperature detection unit.

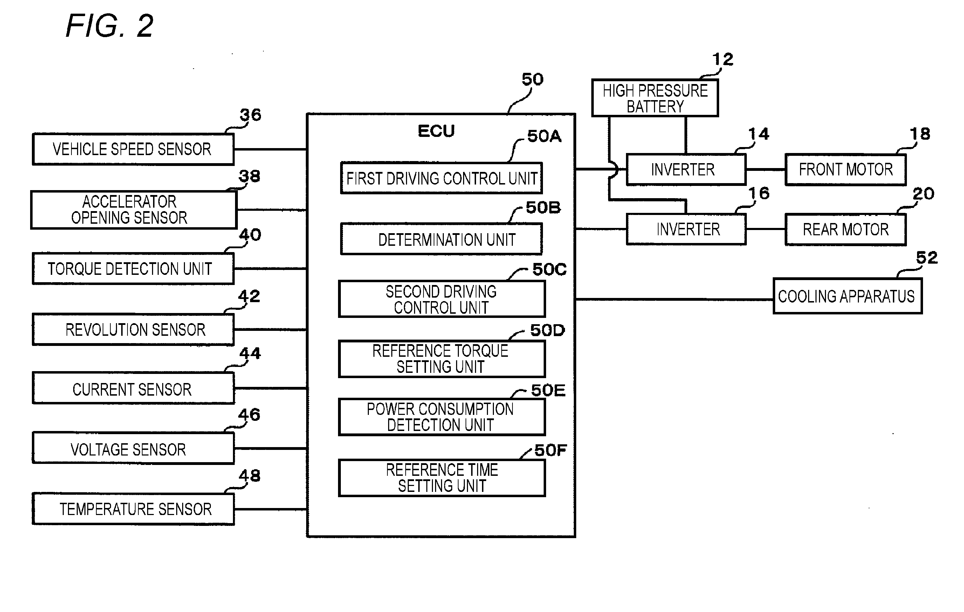

The ECU 50 includes a CPU, a ROM that stores a control program and the like, a RAM that is an operation area of the control program, an interface unit that interfaces with a peripheral circuit and the like, and the like. As shown in FIG. 2, the ECU 50 executes the control program to implement a first driving control unit (motor driving control unit) 50A, a determination unit 50B, a second driving control unit (driving torque distribution control unit) 50C, a reference torque setting unit 50D, a power consumption detection unit 50E and a reference time (predetermined time) setting unit 50F.

When the driving torques output from the front motor 18 and the rear motor 20 are first and second driving torques Trq1, Trq2, respectively, the first driving control unit 50A distributes demand torque Trqd, which is required by a driver's traveling operation, to the first and second driving torques Trq1, Trq2 so that an entire efficiency of the front motor 18 and the rear motor 20 becomes maximum, thereby controlling the front motor 18 and the rear motor 20. Specifically, the first driving control unit 50A provides the inverters 14, 16 with control instructions that are necessary to enable the front motor 18 and the rear motor 20 to output the first and second driving torques Trq1, Trq2. In the meantime, the demand torque Trqd is torque that is necessary to drive the vehicle 10, and is calculated by the first driving control unit 50A, based on an accelerator opening detected by the accelerator opening sensor 38 and vehicle speed detected by the vehicle speed sensor 36 as the accelerator pedal is operated at the time of acceleration, deceleration or constant speed traveling.

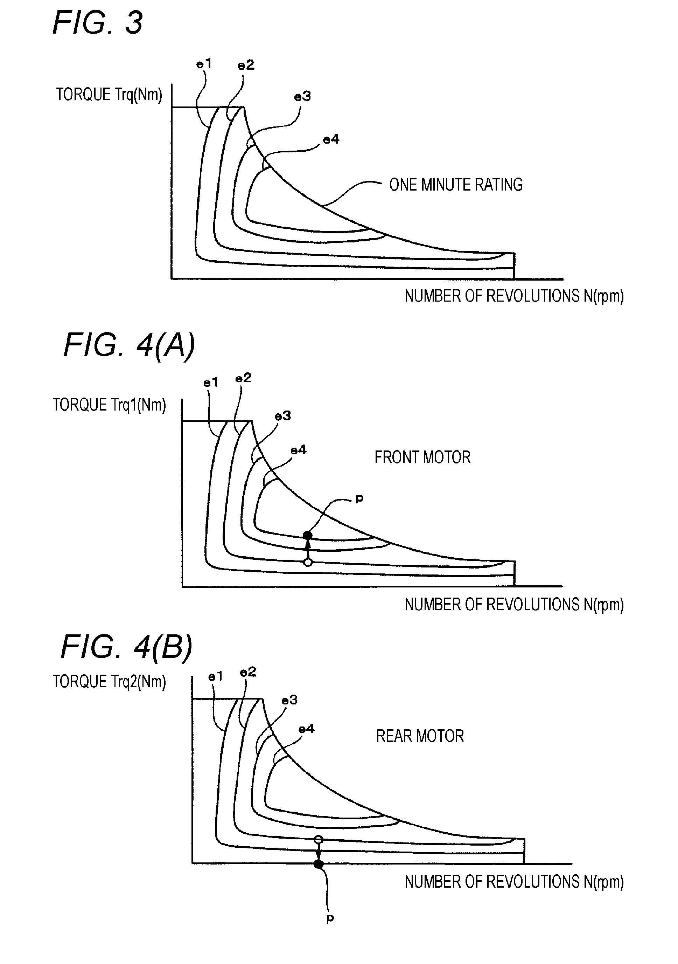

Here, the efficiency of the motor is specifically described. FIG. 3 is a characteristic view of torque vs. the number of revolutions for illustrating an efficiency of a motor, in which a horizontal axis indicates the number of revolutions N (rpm) and a vertical axis indicates torque Trq (Nm). Curves e1, e2, ..., en indicate contour lines of an efficiency e in which a relation of e1 < e2 < ... < en is satisfied. Accordingly, in the characteristic view of torque vs. the number of revolutions, by positioning an operating point p of a motor in an area in which the efficiency e becomes higher, it is possible to secure the higher efficiency e of the motor, which is favorable in reducing the power consumption.

As shown in FIGS. 4(A) and 4(B), when any demand torque Trqd is satisfied, it is considered to respectively position operating points P of the front motor 18 and the rear motor 20, as shown with a symbol O. In this case, the first and second torques Trq1, Trq2 are respectively greater than 0 (zero). However, when the demand request Trqd can be satisfied by the driving of only one motor, in order to maximize the entire efficiency of the front motor 18 and the rear motor 20, it is preferable to locate the operating point p of the front motor 18, which is one motor, in a high efficiency range, and to locate the operating point p of the rear motor 20, which is the other motor, at a position of driving torque Trq2 = 0, as shown with a symbol ● in FIGS. 4(A) and 4 (B) .

The determination unit 50B determines whether time during which one of the first and second driving torques Trq1, Trq2 exceeds predetermined reference torque Trq0 is preset reference time (predetermined time) TO or longer. The reference torque Trq0 is set by the reference torque setting unit 50D, which will be described in the below, and the reference time TO is set by the reference time (predetermined time) setting unit 50F, which will be described later.

When it is determined that the time is the reference time TO or longer, the second driving control unit 50C reduces the driving torque of the motor, for which it is determined that the time is the reference time TO or longer, to below the reference torque Trq0 and increases the driving torque of the other motor, thereby satisfying the demand torque Trqd. By doing so, while satisfying the demand torque Trqd, it is possible to suppress one of the front motor 18 and the rear motor 20 from exceeding the permitted temperature that will be described later.

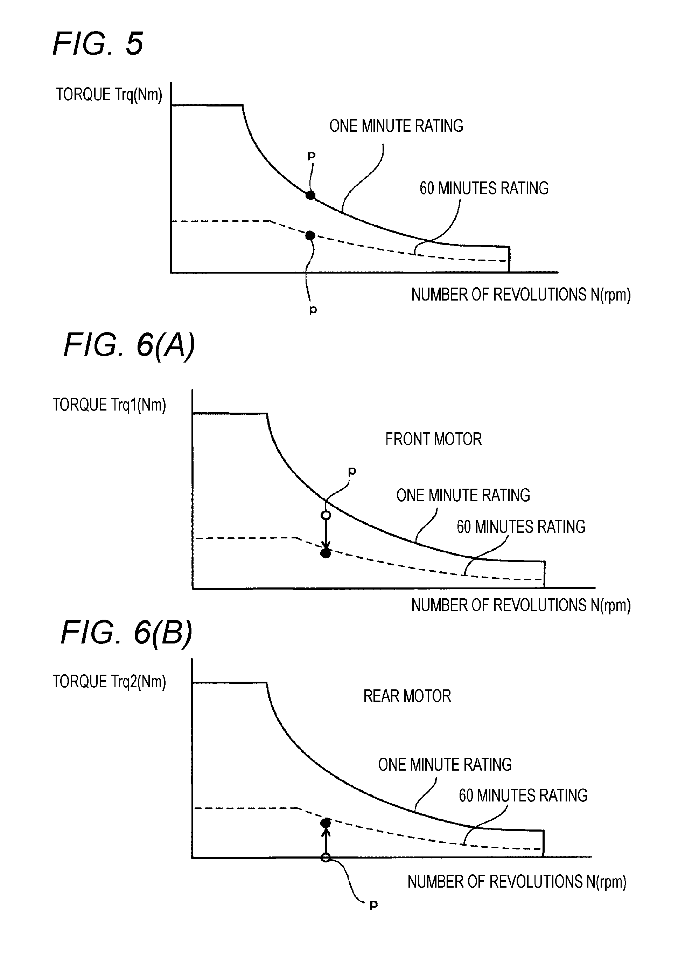

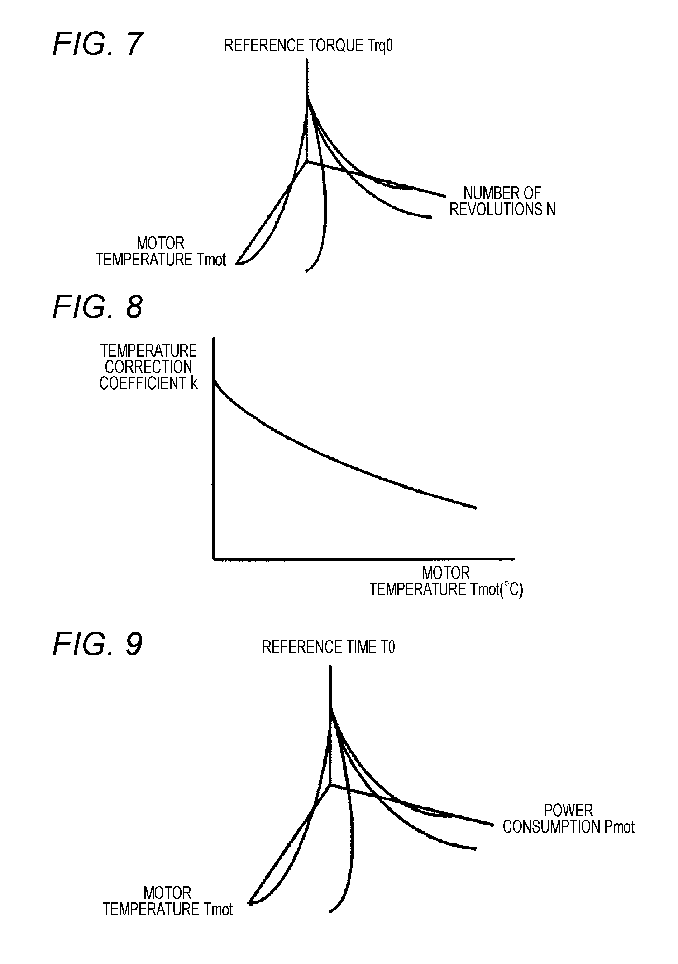

The reference torque setting unit 50D sets the reference torque Trq0, based on the number of revolutions N detected by the revolution sensor 42. The setting of the reference torque Trq0 by the reference torque setting unit 50D is made on the basis of a rating value indicating the upper limit of the driving torque defined in correspondence to the number of revolutions N. Here, the rating of the motor is described. FIG. 5 is a characteristic view of torque vs. the number of revolutions for illustrating a rating of a motor, in which a horizontal axis indicates the number of revolutions N (rpm) and a vertical axis indicates the torque Trq (Nm). In this example, one minute rating and 60 minutes rating as the rating are defined as follows. That is, the solid line indicates one minute rating. The one minute rating indicates the number of revolutions N and the torque Trq under which a motor exceeds the permitted temperature when the motor is driven for one minute or longer. Also, the dotted line indicates 60 minutes rating. The 60 minutes rating indicates the number of revolutions N and the torque Trq under which a motor exceeds the permitted temperature when the motor is driven for 60 minutes or longer. Accordingly, when the operating point p of the motor indicated by the number of revolutions N and the torque Trq is located on the line indicating the one minute rating or in a range beyond the one minute rating, the motor exceeds the permitted temperature in a short time. In order to suppress the excess of the permitted temperature, it is necessary to operate the cooling apparatus 56 to circulate the cooling water or to cool the cooling water by the radiator. From a standpoint of power saving, it is preferable to suppress the operating frequency of the cooling apparatus 52. Therefore, it is necessary to limit the using of the motor under conditions (the number of revolutions N and the torque Trq) in which the motor exceeds the permitted temperature, as much as possible. In addition, when the operating point p of the motor is located on the line indicating the 60 minutes rating, the temperature of the motor exceeds the permitted temperature if the motor is driven over 60 minutes. In this illustrative embodiment, torque that is defined as an intermediate value between one minute rating and 60 minutes rating is used as the rating value indicating the upper limit of the driving torque. Accordingly, the reference torque setting unit 50D keeps data of the rating values (torques) as a map and reads out the torque Trq corresponding to the number of revolutions N from the map, thereby setting the reference torque Trq0. In the meantime, strictly speaking, the one minute rating or 60 minutes rating is also changed by the motor temperature Tmot. Therefore, in this illustrative embodiment, as shown in FIG. 7, a three-dimensional map in which the number of revolutions N (rpm), the motor temperature Tmot (°C) and the reference torque Trq0 (Nm) are made to correspond to each other is formed and is set in the reference torque setting unit 50D. Then, the map is used to set the reference torque Trq0. In other words, the setting of the reference torque Trq0 by the reference torque setting unit 50D is made on the basis of the rating value indicating the upper limit of the driving torque defined in correspondence to the number of revolutions N and the motor temperature Tmot.

The power consumption detection unit 50E detects the power consumptions P of the front motor 18 and the rear motor 20, respectively. In this illustrative embodiment, the power consumption detection unit 50E calculates the power consumptions P, based on currents I supplied to the respective motors 18, 20, which are detected by the current sensor 44, and voltages V supplied to the respective motors 18, 20, which are detected by the voltage sensor 46.

The reference time setting unit 50F sets the reference time T0. In this illustrative embodiment, the higher the power consumption detected by the power consumption detection unit 50E and the higher the motor temperature Tmot, the reference time TO is set to be smaller. That is, the higher the power consumption Pmot of the motor and the higher the motor temperature Tmot, the motor generates heat more easily. Accordingly, since there is a higher possibility that the motor will exceed the permitted temperature, it is necessary to set the reference time TO to be shorter. Here, the setting of the reference time TO is described. The reference time TO is calculated by a following Equation (1).

$$T0 = k \times Tref \qquad\qquad \text{Equation (1)}$$

k is a temperature correction coefficient. As shown in FIG. 8, the higher the motor temperature Tmot, the temperature correction coefficient is decreased. Tref is control switching determination time and is defined by a following Equation (2).

$$Tref = Tc \times (Pc/Pmot)^2 \qquad\qquad \text{Equation (2)}$$

Tc is predetermined determination reference time (fixed value) and Pc is a predetermined determination criterion output (fixed value) of a motor. The determination reference time Tc and the determination criterion output Pc are experimentally determined, for example. Pmot is power consumption of a motor and is expressed by a following Equation (3) or (4).

$$Pmot = I \times V \qquad\qquad \text{Equation (3)}$$

I is a current detected by the current sensor 44 and V is a voltage detected by the voltage sensor 46.

$$Pmot = Trq \times N \times r \qquad\qquad \text{Equation (4)}$$

Trq is driving torque of a motor, N is the number of revolutions and r is a coefficient (fixed value). The coefficient r is experimentally determined, for example. Accordingly, the reference time TO can be calculated by using the Equations (1), (2) and (3) or the Equations (1), (2) and (4), based on the detected motor temperature Tmot and power consumption Pmot. Alternatively, instead of using the above Equations, as shown in FIG. 9, the reference time setting unit 50F may be provided with a three-dimensional map, in which the motor temperature Tmot (°C), the power consumption Pmot (W) and the reference time TO (minute) are made to correspond to each other, and the reference time setting unit 50F may use the map to set the reference time T0.

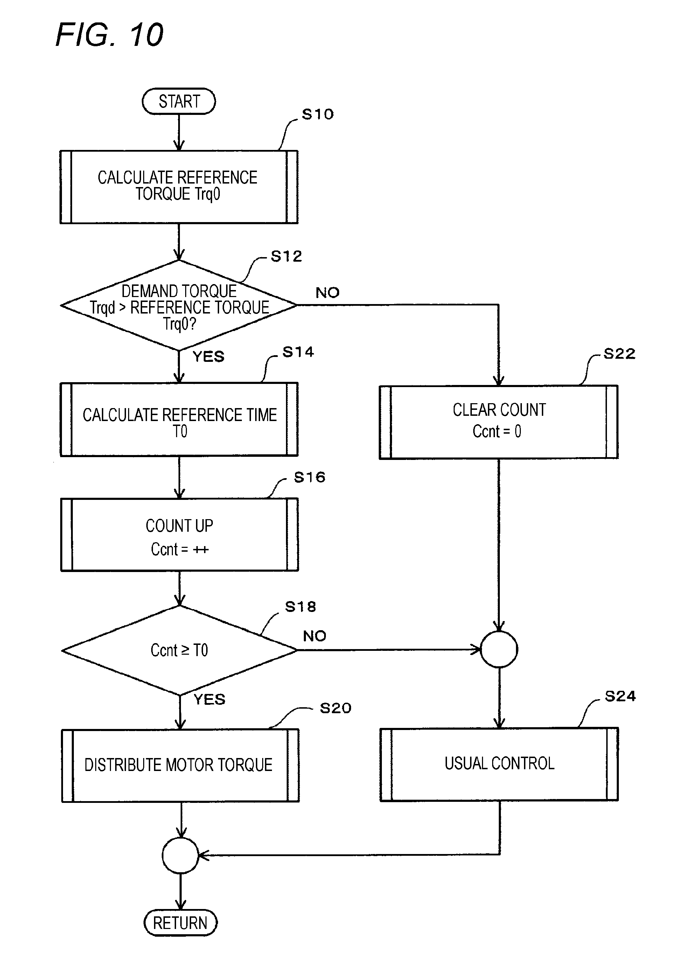

In the below, the operation of the motor control apparatus 26 is described with reference to a flowchart of FIG. 10. First, the ECU 50 calculates and sets the reference torques Trq0, based on the detected number of revolutions N and motor temperatures Tmot (step S10: reference torque setting unit 50D). Then, the ECU 50 determines whether the demand request Trqd based on the traveling operation of a driver is higher than the reference torques Trq0 (step S12: determination unit 50B). When a result of the determination in step S12 is positive, the ECU 50 calculates and sets the reference time T0, based on the detected motor temperatures Tmot and power consumptions Pmot of the motors (step S14: reference time setting unit 50F). Then, the ECU 50 initiates an operation of a counter Ccnt that counts the time during which the relation of the demand torque Trqd > the reference torque Trq0 is satisfied (step S16: determination unit 50B). Then, the ECU 50 determines whether the counted time of the counter Ccnt is the reference time TO or longer (step S18: determination unit 50B). When a result of the determination in step S18 is positive, the ECU 50 reduces the driving torque Trq of the motor, for which it is determined that the time during which the relation of the demand torque Trqd > the reference torque Trq0 is satisfied is the reference time TO or longer, to below the reference torque Trq0 and increases the driving torque Trq of the other motor, thereby controlling the front motor 18 and the rear motor 20 via the inverters 14, 16 so as to satisfy the demand torque Trqd (step S20: second driving control unit 50C). On the other hand, when a result of the determination in step S12 is negative, the ECU clears the time-counting operation of the counter Ccnt for time count (step S22) and executes a typical control of distributing the demand torque Trqd, which is demanded by the traveling operation of the driver, to the first and second driving torques Trq1, Trq2 so as to maximize the entire efficiency of the front motor 18 and the rear motor 20 and thus controlling the front motor 18 and the rear motor 20 (step S24: first driving control unit 50A). Also, when a result of the determination in step S18 is negative, the ECU proceeds to step S24 and executes the typical operation.

The above operation is specifically described with reference to FIGS. 6(A) and 6(B). At the point of time at which the step S10 of FIG. 10 is executed, it is assumed that the operating points P of the front motor 18 and the rear motor 20 are respectively located as shown with the symbol O. That is, in this illustrative embodiment, the operating point p of the front motor 18 is located at the position at which the efficiency is high, the operating point of the rear motor 2 is located at the position at which the driving torque is zero (0) and the entire efficiency of the front motor 18 and the rear motor 20 is maximized. In this case, when a result of the determination in step S18 is positive, the operating point p of the front motor 18 is lowered from the position shown with the symbol O to the position shown with the symbol ● and the operating point p of the rear motor 20 is increased from the position (driving torque is zero) shown with the symbol O to the position shown with the symbol ●, so that the driving torques are generated. Accordingly, when the time during which one of the first and second driving torques Trq1, Trq2 exceeds the predetermined reference torque Trq0 is the predetermined reference time TO or longer, the driving control of distributing the torque so as to maximize the entire efficiency of the front motor 18 and the rear motor 20 is switched into the driving control of suppressing the temperature increase of the motor.

As described above, according to the illustrative embodiment, when the time during which one of the first and second driving torques Trq1, Trq2 exceeds the predetermined reference torque Trq0 is the predetermined reference time TO or longer, the driving torque of the motor, for which it is determined that the time is the reference time TO or longer, is decreased to below the reference torque Trq0 and the driving motor of the other motor is increased, so that the demand torque Trqd is satisfied. Accordingly, while securing the demand torque Trqd, it is favorable in suppressing the motor from generating the heat and exceeding the permitted temperature, which is caused because one of the front motor 18 and the rear motor 20 continues to output the driving torque higher than the reference torque Trq0. In particular, compared to the configuration in which the driving of the motor is controlled based on the motor temperature only, as the related art, since the driving control is less influenced by non-uniformity included in the detected temperatures of the motors, delay of detection time necessary to detect the temperatures of the motors and the like, it is more favorable in suppressing the heat generation of the motors. Also, since it is possible to efficiently suppress the heat generation of the motors, it is favorable in reducing the frequency of operating the cooling apparatus 52 to circulate the cooling water or to cool the cooling water by the radiator, so that it is also advantageous in saving the power.

In this illustrative embodiment, the reference torque Trq0 is set based on the rating value indicating the upper limit of the driving torque defined in correspondence to the number of revolutions N of the motor and the motor temperature Tmot. Accordingly, since it is possible to set the reference torque Trq0 in accordance with both the number of revolutions N and the motor temperature Tmot, it is possible to determine more precisely whether the driving torque exceeds the reference torque Trq0, so that it is advantageous in efficiently suppressing the heat generation of the motors. Also, it may be possible to set the reference torque Trq0, based on the rating value indicating the upper limit of the driving torque defined in correspondence to the number of revolutions N only. This is advantageous in simply setting the reference torque Trq0. However, when setting the reference torque, based on the rating value indicating the upper limit of the driving torque defined in correspondence to the number of revolutions N of the motor and the motor temperature Tmot, as the above illustrative embodiment, it is advantageous in determining more precisely whether the driving torque exceeds the reference torque Trq0.

Also, in this illustrative embodiment, when setting the reference time T0, the higher the power consumption Pmot of the motor and the higher the motor temperature Tmot, the reference time TO is set to be smaller. Accordingly, since it is possible to precisely set the reference time in accordance with both the power consumption Pmot and the temperature Tmot, it is possible to determine more precisely whether the time during which the driving torque exceeds the reference torque Trq0 is the reference time TO or longer, so that it is advantageous in efficiently suppressing the heat generation of the motors.

In this illustrative embodiment, the electric automobile has been described as the vehicle 10 having the front motor 18 and the rear motor 20. However, the invention can be also applied to a hybrid automobile that is an electric vehicle having an engine in addition to the motors 18, 20, as a driving source for travel. That is, in the invention, the electric vehicle includes the hybrid automobile having an engine in addition to the motors 18, 20, as a driving source for travel.

According to an aspect of the invention, when the time during which one of the driving torques distributed to the first and second motors exceeds the predetermined reference torque is the predetermined time or longer, the driving torque of the motor for which it is determined that the time is the predetermined time or longer is reduced to below the reference torque and the driving torque of the other motor is increased, so that the demand torque is satisfied. Accordingly, while securing the demand torque, it is possible to suppress the motor from generating the heat and exceeding the permitted temperature, which is caused because the corresponding one motor of the first and second motors continues to output the driving torque higher than the reference torque.

According to an aspect of the invention, it is possible to set the reference torque in simply.

According to an aspect of the invention, it is possible to determine more precisely whether the driving torques distributed to the motors exceed the reference torques.

According to as aspect of the invention, it is possible to determine more precisely whether the time during which the driving torque exceeds the reference torque is the predetermined time or longer.

According to an aspect of the invention, it is possible to accurately set the predetermined time so as to change the predetermined time based on the motor temperatures.

**Claims**

1. A motor control apparatus for an electric vehicle, the electric vehicle including a first motor to drive front wheels of the electric vehicle and a second motor to drive rear wheels of the electric vehicle, the motor control apparatus comprising:

   a motor driving control unit that distributes a demand torque to be demanded for the electric vehicle and controls the first and second motors;
   a determination unit that counts time during which a driving torque distributed to one of the first and second motors is a reference torque, which is preset for the one of the first and second motors, or higher and determines whether the counted time is predetermined time or longer; and
   a driving torque distribution control unit that, when the counted time is the predetermined time or longer, reduces the driving torque distributed to the one of the first and second motors to below the reference torque and increases a driving torque distributed to the other of the first and second motors.

2. The motor control apparatus according to claim 1, further comprising:

   a revolution detection unit that detects number of revolutions of the first and second motors, respectively, and
   a reference torque setting unit that sets the respective reference torques of the first and second motors, based on rating values indicating upper limits of driving torques defined in correspondence to the number of revolutions of the first and second motors.

3. The motor control apparatus according to claim 2, further comprising a temperature detection unit that detects temperatures of the first and second motors, respectively,
   wherein
   the respective reference torques of the first and second motors are set, based on rating values indicating upper limits of driving torques defined in correspondence to the temperatures of the first and second motors.

4. The motor control apparatus according to claim 1, further comprising:

   a power consumption detection unit that detects power consumptions of the first and second motors, respectively, and
   a predetermined time setting unit that changes the predetermined time into a smaller value as the power consumptions of the first and second motors are increased.

5. The motor control apparatus according to claim 4, wherein the predetermined time setting unit changes the predetermined time into a smaller value as temperatures of the first and second motors are increased.

## FIG. 1

FIG. 2

## FIG. 3

TORQUE Trq(Nm)

e1  e2  e3  e4

ONE MINUTE RATING

NUMBER OF REVOLUTIONS N(rpm)

## FIG. 4(A)

TORQUE Trq1(Nm)

e1  e2  e3  e4

FRONT MOTOR

p

NUMBER OF REVOLUTIONS N(rpm)

## FIG. 4(B)

TORQUE Trq2(Nm)

e1  e2  e3  e4

REAR MOTOR

p

NUMBER OF REVOLUTIONS N(rpm)

*FIG. 5*

TORQUE Trq(Nm)

ONE MINUTE RATING

60 MINUTES RATING

p

p

NUMBER OF REVOLUTIONS N(rpm)

*FIG. 6(A)*

TORQUE Trq1(Nm)

FRONT MOTOR

p

ONE MINUTE RATING

60 MINUTES RATING

NUMBER OF REVOLUTIONS N(rpm)

*FIG. 6(B)*

TORQUE Trq2(Nm)

REAR MOTOR

ONE MINUTE RATING

60 MINUTES RATING

NUMBER OF REVOLUTIONS N(rpm)

p

## FIG. 7

REFERENCE TORQUE Trq0

NUMBER OF
REVOLUTIONS N

MOTOR
TEMPERATURE Tmot

## FIG. 8

TEMPERATURE
CORRECTION
COEFFICIENT k

MOTOR
TEMPERATURE Tmot(°C)

## FIG. 9

REFERENCE TIME T0

POWER
CONSUMPTION Pmot

MOTOR
TEMPERATURE Tmot

## FIG. 10

START

CALCULATE REFERENCE
TORQUE Trq0 — S10

DEMAND TORQUE
Trqd > REFERENCE TORQUE
Trq0? — S12

NO

YES

CALCULATE REFERENCE TIME
T0 — S14

CLEAR COUNT
Ccnt = 0 — S22

COUNT UP
Ccnt = ++ — S16

Ccnt ≥ T0 — S18

NO

YES

DISTRIBUTE MOTOR TORQUE — S20

USUAL CONTROL — S24

RETURN

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7046721 A